# EUROPÄISCHE PATENTSCHRIFT

(11) **EP 3 925 907 B1**
(45) Veröffentlichungstag und Bekanntmachung des Hinweises auf die Patenterteilung: **13.08.2025**
(21) Anmeldenummer: 21179426.8
(22) Anmeldetag: 15.06.2021
(51) Int. Cl.: B23P 19/00, B23P 21/00, B65G 1/04

(54) **SPEICHER- UND/ODER FERTIGUNGSSYSTEM MIT WENIGSTENS EINEM HANDHABUNGSGERÄT**
STORAGE AND / OR PRODUCTION SYSTEM WITH AT LEAST ONE MANIPULATOR
SYSTÈME DE STOCKAGE ET/OU DE PRODUCTION POURVU D'AU MOINS UN APPAREIL DE MANUTENTION

(30) Priorität: 16.06.2020 DE 102020115816
(43) Veröffentlichungstag der Anmeldung: 22.12.2021
(73) Patentinhaber: Liebherr-Verzahntechnik GmbH, 87437 Kempten (DE)
(72) Erfinder: Zollitsch, Markus, 87490 Haldenwang (DE); Friedberger, Nicolai, 87527 Sonthofen (DE); Guggemos, Herbert, 87496 Untrasried (DE); Hößle, Florian, 87509 Immenstadt (DE)
(74) Vertreter: Laufhütte, Dieter

(56) Entgegenhaltungen:
- EP-A1- 3 272 697
- EP-A1- 3 657 123
- DE-A1- 102013 002 622

## Beschreibung

Die Erfindung betrifft ein Speicher- und/oder Fertigungssystem mit einem Handhabungsgerät mit einem Hebewerkzeug zur Manipulation von Werkstückträgern.

Bei Speicher- und/oder Fertigungssystemen handelt es sich um Automationslösungen für beispielsweise die Fertigung, die Bearbeitung oder der Montage von Werkstücken. Als Speichersystem werden üblicherweise Lösungen zum automatischen Zwischenspeichern von Werkstücken, Werkstückträgern oder Werkzeugen bezeichnet. Unter Fertigungssystem werden im einfachsten Sinne Lösungen zur automatisierten Versorgung von einer oder mehreren Bearbeitungsstationen, beispielsweise das automatische Be- und Entladen einer Maschine mit Werkstücken, Werkstückträgern oder Werkezeugen, verstanden. Dabei werden Speicher- und Fertigungssystem sind Automationslösungen die sowohl das Zwischenspeichern als auch die Fertigungsversorgung.

Bekannte Handhabungsgeräte zur Manipulation von Werkstückträgern in einem Speicher- und/oder Fertigungssystem umfassen beispielsweise Regalbediengeräte (RBG), im Englischen als "stacker crane" (STC) bezeichnet. Es handelt sich dabei bei großen Speicher- und /oder Fertigungssystemen häufig um schienengeführte Fahrzeuge zur Manipulation von Werkstückträgern wie insbesondere Paletten in einem Speichersystem und/oder zum Beladen und Entladen von Bearbeitungsmaschinen und Rüstplätzen eines Fertigungssystems. Die Bewegung eines Regalbediengeräts erfolgt typischerweise in drei Achsen, nämlich in Ganglängsrichtung des Speichersystems anhand der sogenannten Fahreinheit des Regalbediengeräts, in der vertikalen Richtung anhand der sogenannten Hubeinheit des Regalbediengeräts und in Gangquerrichtung anhand der Lastaufnahmeeinheit des Regalbediengeräts. **In** kleinen Speicher- und/ oder Fertigungssystemen sind Regalbediengeräte meist an einem Standort fixiert. Das Regalbediengerät ist üblicherweise mittig zwischen den weiteren Bestandteilen des Speicher- und/oder Fertigungssystems angeordnet, wobei die weiteren Bestandteile beispielsweise Regale, Rüstplätze oder Maschinen umfassen können. Dadurch kann das Regalbediengerät typischerweise durch Bewegung in drei Achsen, nämlich durch Drehbewegung der Fahreinheit des Regalbediengeräts um die eigene Achse, in der vertikalen Richtung anhand der sogenannten Hubeinheit des Regalbediengeräts und in Querrichtung anhand der Lastaufnahmeeinheit des Regalbediengeräts, die Werkstückträger an den weiteren Bestandteilen des Speicher- und/oder Fertigungssystems manipulieren. Die Lastaufnahmeeinheit umfasst ein Hebewerkzeug in Form von beispielsweise einer Gabel mit zwei Zinken. Eine gattungsgemäße Handhabungsgerät wird beispielsweise in der EP 3 272 697 A1 offenbart.

Es gibt eine Vielzahl an Maschinen- und Materialpaletten, die sich bedingt durch den Maschinenhersteller und/oder aufgrund von individueller Maschinen- bzw. Werkstückeigenschaften in ihrer Form voneinander unterscheiden. So kann es bei der Verbindung von verschieden Maschinen und/oder Werkstücken, mit ihren jeweiligen individuellen Maschinen und/oder Werkstückpaletten, zu einem Speicher- und/ oder Fertigungssystems dazu kommen, dass die jeweiligen Maschinen- und/oder Werkstückpaletten nicht von einem einzigen unveränderlichen Hebewerkzeug gehandhabt werden können.

Eine naheliegende Lösung dieses Problems ist die Gestaltung einer Palette bzw. eines allgemeinen Werkstückträgers für das Speicher- und/oder Fertigungssystem, was einen Kompromiss zwischen den unterschiedlichen Anforderungen von Maschinen und/oder Werkstücken eines Speicher- und/ oder Fertigungssystems darstellt. Darunter leidet meist jedoch die Produktivität des Speicher- und/oder Fertigungssystems. Ein weiterer Nachteil dieses Lösungsansatzes ist, dass nicht immer eine Palette bzw. ein allgemeiner Werkstückträger für das Speicher- und/oder Fertigungssystem gestaltet werden kann. Eine andere im Stand der Technik bekannte Herangehensweise ist der Einsatz von Aufsatzpaletten in den Bearbeitungsmaschinen eines Fertigungssystems. In diesem Fall müssen jedoch in der Bearbeitungsmaschine verbleibende Maschinenpaletten angepasst werden, was zu Mehrkosten führen kann. Weiterhin kann das Speicher- und/oder Fertigungssystem in zwei getrennte Systeme aufgeteilt werden, was jedoch in der Regel mit signifikanten Mehrkosten verbunden ist, da viele Bauteile doppelt benötigt werden.

Um Werkstückträger bzw. Paletten unterschiedlicher Bauart innerhalb desselben Speicher- und/oder Fertigungssystems handhaben zu können, sind bereits Handhabungsvorrichtungen mit einer Gabel mit zwei Zinken bekannt geworden, bei welcher der Abstand zwischen den Zinken verstellt werden kann. Diese an sich elegante Lösung ist allerdings nur für solche Systeme geeignet, bei denen sich die zu handhabenden Paletten nur in ihrer Breite unterscheiden. Werden aber für das Handhaben der unterschiedlichen Paletten nicht nur Gabeln mit unterschiedlich beabstandeten Zinken, sondern generell unterschiedliche Hebewerkzeuge wie Gabeln mit anderen Zinkenlängen oder Aufnahmezapfen benötigt, schafft die genannte Lösung keine Abhilfe.

Aufgabe der Erfindung ist es, ein Speicher- und/oder Fertigungssystem und ein korrespondierendes Handhabungsgerät anzugeben, mit dem die genannten Nachteile aus dem Stand der Technik überwunden werden.

Vor diesem Hintergrund betrifft die Erfindung ein Speicher- und/oder Fertigungssystem nach Anspruch 1.

Bevorzugte Ausführungsformen werden in den abhängigen Ansprüchen 2 bis 9 definiert.

Erfindungsgemäß ist vorgesehen, dass die Lastaufnahmeeinheit eine Schnittstelle zur Befestigung des Hebewerkzeugs aufweist, die so ausgebildet ist, dass das Hebewerkzeug oder ein Teil des Hebewerkzeugs automatisch gewechselt oder entfernt werden kann. Hierzu weist das Handhabungsgerät eine lösbare Verriegelungsvorrichtung auf, die im geschlossenen Zustand das Hebewerkzeug bzw. dessen wechselbarer Teil gegen Verlust sichert. Zudem ist mindestens ein Speicherplatz für Hebewerkzeuge im Speicher- und/oder Fertigungssystems vorgesehen an dem die lösbare Verriegelungsvorrichtung des Handhabungsvorrichtungs von einem geschlossenen in einen offenen Zustand und umgekehrt versetzt werden kann.

Bei dem Handhabungsgerät handelt es sich vorzugsweise um ein Regalbediengeräte (RBG), im Englischen als "stacker crane" (STC) bezeichnet. Es dient der Manipulation von Werkstückträgern wie insbesondere Paletten in einem Speichersystem und/oder zum Beladen und Entladen von Bearbeitungsmaschinen und Rüstplätzen eines kombinierten Speicher- und Fertigungssystems. Bei dem an die Lastaufnahmeeinheit gekoppelten Hebewerkzeug handelt es sich vorzugsweise um eine Gabel mit zwei Zinken.

In einer Ausführungsform der Erfindung kann nur ein Teil des Hebewerkzeugs gewechselt werden. Beispielsweise können einzelne Zinken einer Gabel mit zwei oder mehr als zwei Zinken entfernt oder gewechselt werden.

Die Schnittstelle und das Hebewerkzeug bzw. dessen wechselbarer Teil sind vorzugsweise gegen Verlust gesichert, sodass sich das Hebewerkzeug nicht nach etwa einer Kollision mit anderen Bestandteilen des Systems unbeabsichtigt lösen kann oder seine Position bzw. Ausrichtung am Handhabungsgerät verändern kann. Zur Sicherung können verschiedene Verriegelungsvorrichtungen vorgesehen sein, die auf pneumatischer, hydraulischer, mechanischer oder elektrischer Basis bzw. auf kombinierter Basis arbeiten können.

In einer nicht erfindungsgemässen Ausführungsform umfasst das Handhabungsgerät eine Betätigungsvorrichtung, die ausgebildet ist, die Verriegelungsvorrichtung aus einem geschlossenen in einen offenen Zustand zu überführen, in dem das Hebewerkzeug bzw. dessen wechselbarer Teil nicht mehr gegen Verlust gesichert sind. Die Betätigungsvorrichtung kann insbesondere als mechanische Betätigungsvorrichtung ausgebildet sein.

In einer Ausführungsform umfasst das Handhabungsgerät wenigstens einen Sensor zur Bestimmung des Vorhandenseins bzw. der Position des Hebewerkzeugs an der Lastaufnahmeeinheit bzw. einer bestimmten Schnittstelle. Mehrere Sensoren können in einer Sensoranordnung zusammengefasst sein. Der bzw. ein Sensor oder die bzw. einige Sensoren können zusätzlich oder alternativ ausgebildet sein, den Zustand des Verriegelungsmechanismus überwachen und/oder das angekoppelte Hebewerkzeug bzw. den angekoppelten Hebewerkzeugteil zu identifizieren.

Die Sensoren und/oder die Betätigungsvorrichtung können mit einer Steuereinheit des Handhabungsgeräts oder, mit Hilfe einer entsprechenden Schnittstelle, mit einer Steuereinheit des Systems in Signalverbindung stehen.

In einer Ausführungsform umfasst das Handhabungsgerät zwei oder mehr Lastaufnahmeeinheiten mit je mindestens einer wie beschriebenen Schnittstelle, oder die Lastaufnahmeeinheit umfasst zwei oder mehr wie beschriebene Schnittstellen. In dieser Ausführungsform ist das Handhabungsgerät folglich als Doppel- oder Mehrfachlader ausgebildet.

Vor dem eingangs genannten Hintergrund betrifft die Erfindung ferner ein Speicher- und/oder Fertigungssystem mit wenigstens einem erfindungsgemäßen Handhabungsgerät sowie mit einer Wechselstation, die mindestens einen Speicherplatz für das wechselbare Hebewerkzeug des Handhabungsgeräts bzw. einen wechselbaren Teil davon umfasst.

An einem Speicherplatz kann das wechselbare Hebewerkzeug oder der wechselbare Teil automatisch vom Handhabungsgerät abgelegt und aufgenommen werden.

Vorzugsweise umfasst die Wechselstation wenigstens zwei Speicherplätze. Ein Speicherplatz kann jeweils ein Hebewerkzeug oder einen Hebewerkzeugteil aufnehmen, sodass ein Hebewerkzeug bzw. Hebewerkzeugteil einer ersten Art an einem ersten Speicherplatz und ein Hebewerkzeug bzw. Hebewerkzeugteil einer zweiten Art an einem anderen Speicherplatz abgelegt werden kann. Die Speicherplätze können gesammelt an einem Ort innerhalb des Systems angeordnet oder über das System verteilt sein.

Die Wechselstation oder einzelne Speicherplätze der Wechselstation können als eigenständige Stationen innerhalb des Systems vorliegen oder in andere Bestandteile des Systems integriert sein, insbesondere in Speicherregale, Rüstplätze oder Bearbeitungsmaschinen.

Vorzugsweise entspricht die Anzahl der Speicherplätze mindestens der Anzahl der für den Betrieb des Systems notwendigen Hebewerkzeuge bzw. Hebewerkzeugteile.

Alternativ oder zusätzlich zu den Speicherplätzen kann auf dem Handhabungsgerät mindestens ein Ablageplatz für die Hebewerkzeuge vorgesehen sein. Als Ablageplatz eignet sich grundsätzlich jede Fläche, auf der die Hebewerkzeuge abgelegt werden können. Gemäß einer bevorzugten Ausführung kann hier die Oberfläche einer auf dem Handhabungsgerät vorgesehenen Ölwanne als Ablageplatz dienen. Alternativ ist der Ablageplatz auf der Ölwanne des Handhabungsgeräts als ein Speicherplatz ausgebildet.

Durch ein Verfahren des Handhabungsvorrichtungs bzw. der Lastaufnahmeeinheit des Handhabungsvorrichtungs in X-Richtung, Y-Richtung und/oder Z-Richtung des Systems können Hebewerkzeuge an die Speicherplätze abgelegt und aus dieses entnommen werden. Das Gerät kann beim Ablegen in alle Richtungen verfahren werden, je nach Ausgestaltung des Geräts und der Regale werden aber für manche Vorgänge nicht alle Freiheitsgrade ausgenutzt.

Die Speicherplätze weisen vorzugsweise Positionierhilfen für darauf abgelegte Hebewerkzeuge auf, beispielsweise Steckpins oder Schienen.

Erfindungsgemäß weisen die Speicherplätze eine Betätigungsvorrichtung auf, die ausgebildet ist, eine am Handhabungsgerät ausgebildete Verriegelungsvorrichtung aus einem geschlossenen Zustand, in dem das Hebewerkzeug bzw. dessen wechselbarer Teil gegen Verlust gesichert sind, in einen offenen Zustand zu überführen, in dem das Hebewerkzeug bzw. dessen wechselbarer Teil nicht mehr gegen Verlust gesichert sind. So kann eine Verriegelungsvorrichtung am Handhabungsgerät nur am Speicherplatz gelöst werden. Die Betätigungsvorrichtung kann insbesondere als mechanische Betätigungsvorrichtung ausgebildet sein.

In einer nicht erfindungsgemäßen Alternative kann sich die Betätigungsvorrichtung auch am Handhabungsgerät, vorzugsweise an der Lastaufnahmeinheit, befinden.

In einer Ausführungsform weisen die Speicherplätze wenigstens einen Sensor sowie eine Schnittstelle zur Übertragung eines Sensorsignals an eine Steuereinheit des Handhabungsgeräts oder des Systems auf. Mehrere Sensoren können in einer Sensoranordnung zusammengefasst sein. Der Sensor oder die Sensoren können ausgebildet sein, die Belegung des Speicherplatzes mit einem Hebewerkzeug bzw. Hebewerkzeugteil, die Position des Hebewerkzeugs bzw. Hebewerkzeugteils am Speicherplatz und/oder die Art des am Speicherplatz befindlichen Hebewerkzeugs bzw. Hebewerkzeugteils zu erkennen.

Das Handhabungsgerät bzw. das System können so ausgebildet sein, dass eine Verriegelungsvorrichtung für das Hebewerkzeug bzw. einen Hebewerkzeugteil an der Handhabungsgerätin Reaktion auf ein Signal von Sensoren des Speicherplatzes und/oder von Sensoren am Handhabungsgerät gelöst oder verriegelt wird. Beispielsweise beim Ablegen des Hebewerkzeugs bzw. Hebewerkzeugteils am Speicherplatz ein Signal an die Steuereinheit übermittelt werden, sobald das Hebewerkzeug bzw. der Hebewerkzeugteil richtig positioniert ist. In der Folge kann die Steuereinheit ein Signal zum Lösen der Verriegelung an eine Betätigungsvorrichtung übermitteln.

Alternativ kann die Betätigungsvorrichtung auch unabhängig von Sensorsignalen und rein auf der Grundlage einer vorprogrammierten Routine angesteuert werden.

Anhand einer erfindungsgemäßen Handhabungsgeräts bzw. eines erfindungsgemäßen Systems können mehrere Werkstückträger, insbesondere mehrere Paletten mindestens zweier unterschiedlicher Typen A und B gehandhabt werden. Werkstückträger vom Typ A können nicht mit dem gleichen Hebewerkzeug gehandhabt werden, wie Werkstückträger vom Typ B. Deshalb werden zwei Typen A' und B' an Hebewerkzeugen benötigt, wobei ein Hebewerkzeug vom Typ A' einen Werkstückträger vom Typ A und ein Hebewerkzeug vom Typ B' einen Werkstückträger vom Typ B handhaben kann. Wenn das Handhabungsgerät mit einem Hebewerkzeug des Typs A' bestückt ist, jedoch ein Werkzeugträger des Typs B gehandhabt werden soll, fährt das Handhabungsgerät an einen Speicherplatz der Wechselstation und legt dort automatisch das Hebewerkzeug des Typs A' ab. Sodann fährt das Handhabungsgerät an einen anderen Speicherplatz der Wechselstation und nimmt dort automatisch das Hebewerkzeug des Typs B' auf. In der Folge kann das Handhabungsgerät dann Werkstückträger vom Typ B manipulieren.

Weitere Einzelheiten und Vorteile der Erfindung ergeben sich aus dem nachfolgend anhand der Figuren beschriebenen Ausführungsbeispiel. In den Figuren zeigen:
- Figur 1:: eine erste Ausführungsform eines erfindungsgemäßen Speicher- und/oder Fertigungssystems;
- Figur 2:: eine zweite Ausführungsform eines erfindungsgemäßen Speicher- und/oder Fertigungssystems;
- Figur 3:: eine dritte Ausführungsform eines erfindungsgemäßen Speicher- und/oder Fertigungssystems;

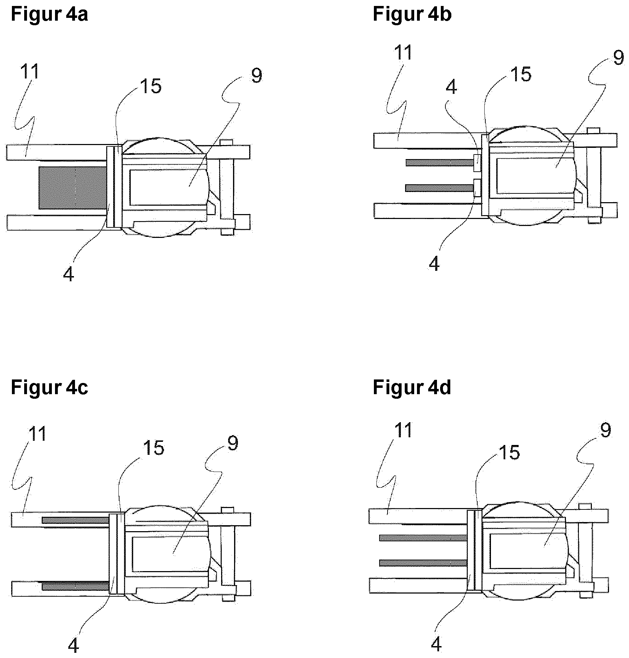

- Figuren 4a-4d:: eine mit unterschiedlichen Hebewerkzeugen ausgerüstetes Handhabungsgerät solcher Systeme;
- Figur 5:: eine Seitenansicht eines Regals mit Speicherplätzen einer Wechselstation;
- Figuren 6a-6b:: Ansichten einer ersten Ausführungsform eines solchen Speicherplatzes;
- Figur 7:: eine Seitenansicht einer zweiten Ausführungsform eines solchen Speicherplatzes;
- Figuren 8a-8b:: Ansichten eines Befestigungsbereichs eines Hebewerkzeugs am Handhabungsgerät in einer Ausführungsform;
- Figuren 9a-9c:: einen Vorgang zur Ablage eines wie in Figuren 7a-7b befestigten Hebewerkzeugs an einem wie in Figur 5 dargestellten Speicherplatz;
- Figuren 10a-10c:: Ansichten eines Befestigungsbereichs eines Hebewerkzeugs am Handhabungsgerät in einer anderen Ausführungsform; und
- Figuren 11a-11b:: Ansichten eines Befestigungsbereichs eines Hebewerkzeugs am Handhabungsgerät in einer wiederum anderen Ausführungsform; und
- Figur 12:: eine alternative Ausführung eines Handhabungsgerätes mit einem integrierten Ablageplatz zur Aufnahme der Hebewerkzeuge..

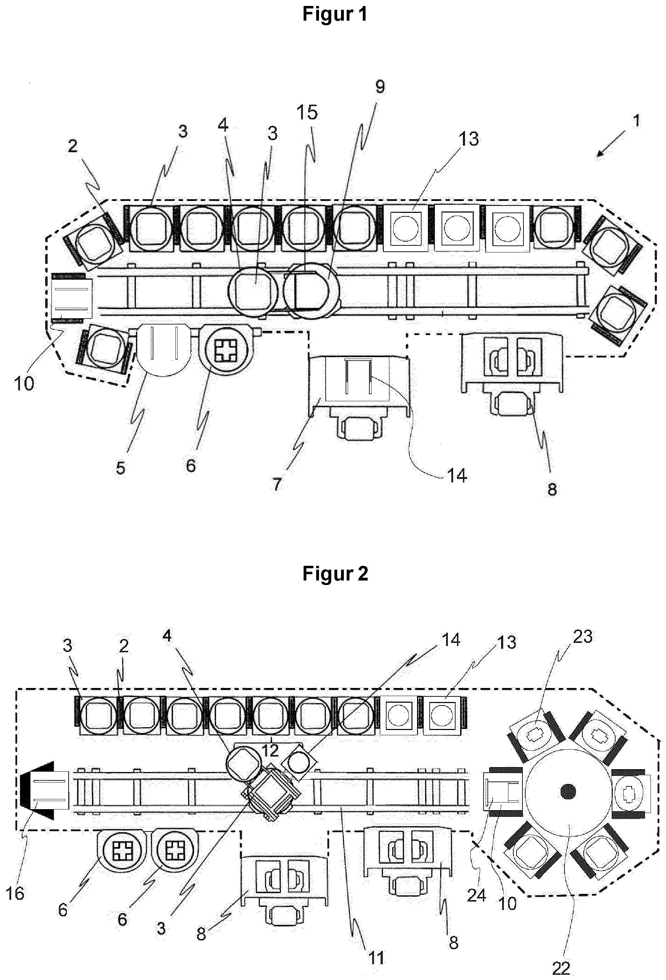

**In** Figuren 1 und 2 sind jeweils Ansichten auf unterschiedliche Ausführungsformen erfindungsgemäßer Speicher- und/oder Fertigungssysteme 1 in der Vogelperspektive gezeigt.

Das System 1 umfasst in beiden Ausführungsformen mehrere Regale 2 bzw. 10 mit Fächern zur Lagerung von Paletten 3, 13 bzw. 23, zwei Rüstplätze 5 und 6 sowie zwei Bearbeitungsmaschinen 7 und 8. Die Regale 2 bzw. 10, die Rüstplätze 5 und 6 sowie die Bearbeitungsmaschinen 7 und 8 sind beidseitig eines Ganges angeordnet, in dem sich ein erfindungsgemäßes Handhabungsgerät 9 befindet, die entlang von Schienen 11 in Längsrichtung des Ganges verfahren werden kann.

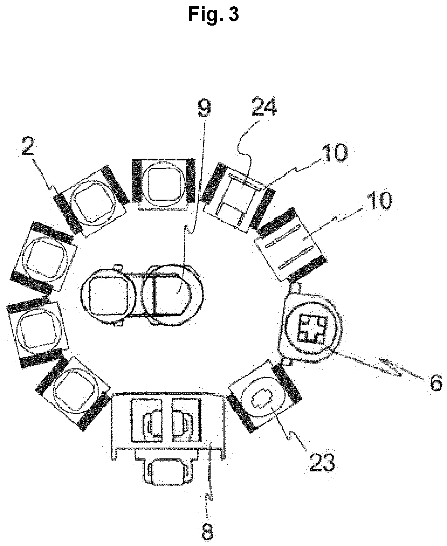

Das Handhabungsgerät 9 ist erfindungsgemäß so ausgebildet, dass die Hebewerkzeuge 4, 12, 14 bzw. 24 lösbar auf einer Schnittstelle 15 des Handhabungsgeräts 9 befestigt sind und automatisch gewechselt werden können. Figuren 3a-3d zeigen Ansichten auf das mit unterschiedlichen Hebewerkzeugen 4, 13, 14 bzw. 24 ausgerüstete Handhabungsgerät 9 aus der Vogelperspektive.

Die Regale 2 sind reguläre Regale mit Ablagen zur Aufnahme von Paletten 3 eines ersten Typs A und von Paletten 13 eines zweiten Typs B. Die Paletten 3 und 13 dienen als Träger für Werkstücke oder Werkzeuge. Die Regale 10 umfassen zusätzlich Speicherplätze 17 und 18 für wechselbare Hebewerkzeuge 4, 12, 14, 24 des Handhabungsgeräts 9 und stellen mithin Teil einer Wechselstation des Systems 1 dar.

Der Rüstplatz 6 ist ein regulärer Rüstplatz und die Bearbeitungsmaschine 8 ist eine reguläre Bearbeitungsmaschine, während Rüstplatz 5 und Bearbeitungsmaschine 7 zusätzlich Speicherplätze 17 und 18 für wechselbare Hebewerkzeuge 4, 12, 14, 24 des Handhabungsgeräts 9 aufweisen und mithin ebenfalls Teil der Wechselstation des Systems 1 darstellen.

Die Ausführungsform der Figur 2 unterscheidet sich, abgesehen von einigen geringfügigen Unterschieden im Layout der einzelnen Vorrichtungen und Stationen, insofern von der Ausführungsform gemäß Figur 1, als das Handhabungsgerät 9 dort als Doppellader ausgebildet ist und einen um eine vertikale Achse rotierbaren Aufbau mit zwei Lastaufnahmeeinheiten aufweist, die je eine Schnittstelle 15 zur Befestigung eines Hebewerkzeugs 4, 12, 14, 24 aufweisen. Weiterhin ist in der Ausführungsform der Figur 2 an einem Ende des Ganges eine rotierbare Regalanordnung 22 angeordnet, durch welche die Speicherkapazität des Systems erhöht werden kann, an welcher Paletten 3 mit Werkstücken an ein weiteres System übergeben werden können, und an welcher Hebewerkzeuge 4, 12, 14, 24 in das System 1 eingebracht bzw. aus diesem entnommen werden können.

Die Ausführungsform der Figur 3 zeigt das Speicher- und/oder Fertigungssystem mit einem am Standort fixierten Handhabungsgerät und einer Fahreinheit, wobei die Fahreinheit eine Drehbewegung um die eigene Achse erlaubt. Hierbei sind die einzelnen Vorrichtungen, wie Regale 2, Rüstplätze 6, und Bearbeitungsmaschinen 8, um das Handhabungsgerät 9 herum angeordnet. Dadurch sind die einzelnen Vorrichtungen durch die Drehbewegung der Fahreinheit und der weiteren Bewegungen durch Hubeinheit und Lastaufnahmeeinheit mit dem Regalbediengerät erreichbar. **In** der Figur 3 sind die Vorrichtungen in Kreisform um das Handhabungsgerät 9 angeordnet. Die Vorrichtungen können aber auch Ovalförmig oder in anderen geometrischen Formen um das Regalbediengerät angeordnet sein.

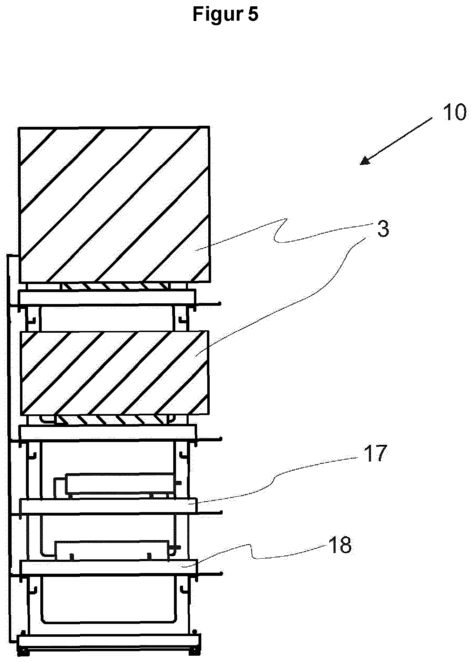

Ein mit zusätzlichen Speicherplätzen 17 und 18 für wechselbare Hebewerkzeuge 4, 12, 14, 24 des Handhabungsgerät 9 ausgerüstetes Regal 10 ist in der Seitenansicht der Figur 5 in größerem Detail dargestellt. Die oberen beiden Fächer des Regals 10 dienen der Ablage einer Palette 3 mit Werkstücken, während die unteren beiden Fächer als Speicherplätze 17 und 18 für wechselbare Hebewerkzeuge 4, 12, 14, 24 des Handhabungsgeräts 9 ausgebildet sind.

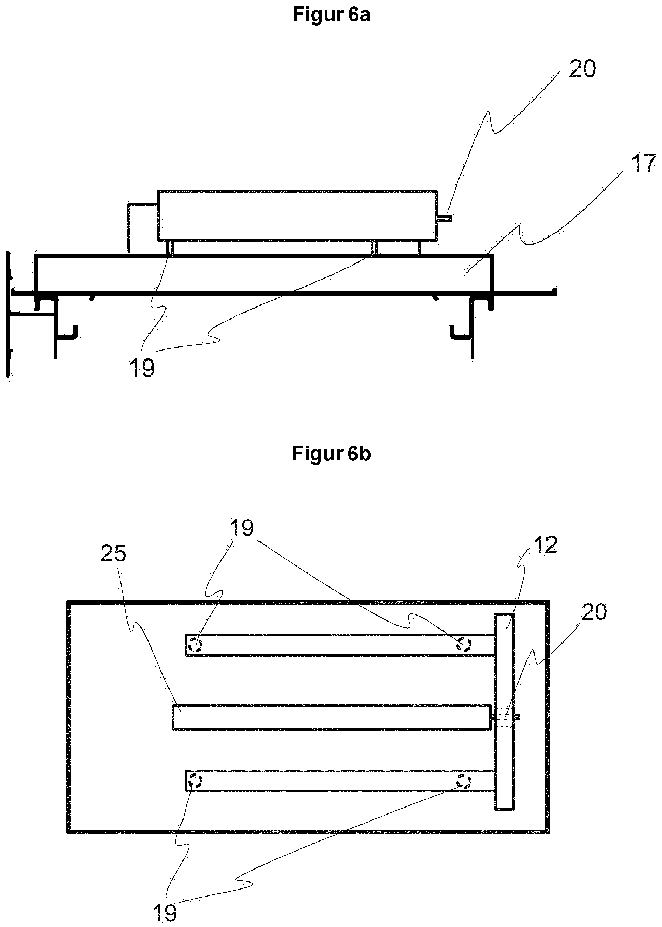

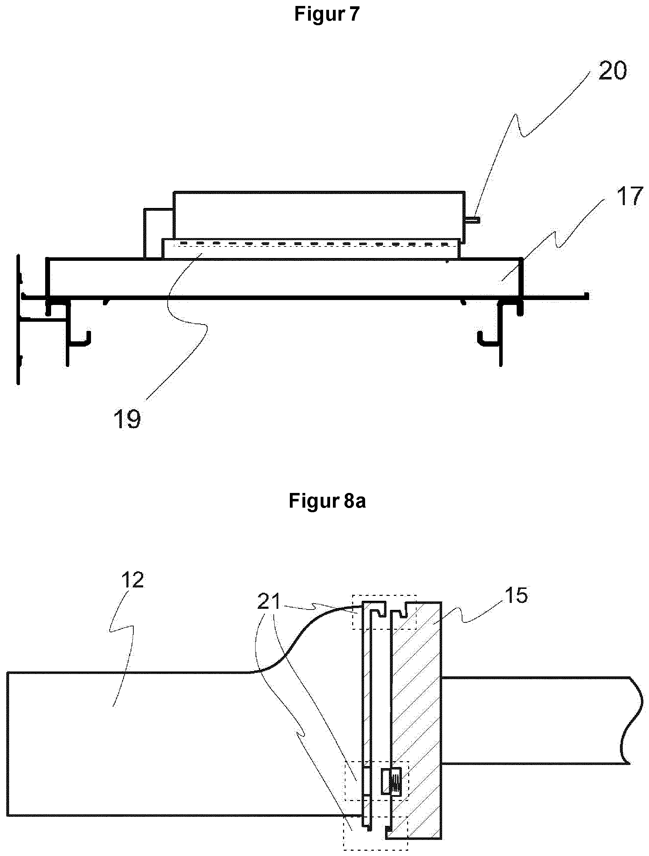

Zwei Varianten eines Speicherplatzes 17 sind in den Figuren 6a-6b sowie Figur 7 dargestellt. Die Varianten unterscheiden sich in den Typen der Positionierhilfen 19 für die Hebewerkzeuge 4, 12, 14, 24. In der Variante gemäß Figuren 6a-6b sind die Positionierhilfen 19 in Form vertikaler Steckpins ausgebildet. In der Variante gemäß Figur 7 sind die Positionierhilfen 19 in Form von in Tiefenrichtung des Speicherplatzes 17 verlaufender Schienen ausgebildet. In beiden Varianten umfasst der Speicherplatz 17 eine Betätigungsvorrichtung 20 in Form eines frontal abstehenden Druckpins, um einen am Handhabungsgerät 9 ausgebildeten Verriegelungsmechanismus 21 zum Halten eines Hebewerkzeugs 4, 12, 14, 24 lösen und verriegeln zu können, wie es in weiterer Folge noch konkreter beschreiben werden wird. Weiterhin umfassen beide Varianten des Speicherplatzes 17 eine (nur in der Draufsicht der Figur 5b erkennbare) Sensoranordnung 25, um eine Belegung des Speicherplatzes 17 mit einem Hebewerkzeug 4, 12, 14, 24 sowie eine korrekte Positionierung des Hebewerkzeugs 4, 12, 14, 24 auf dem Speicherplatz 17 erkennen zu können.

Die Figuren 8a-8b zeigen Seiten- und Frontansichten einer Ausführungsform der Schnittstelle 15 des Handhabungsgeräts 9 und einer Quertraverse des Hebewerkzeugs 12 gezeigt. Die Befestigung und insbesondere der Verriegelungsmechanismus 21 sind in diesen Figuren gut erkennbar.

Die Schnittstelle 15 des Handhabungsgeräts 9 oben und unten je in Querrichtung verlaufende und nach oben offene Kerben. In diese beiden Kerben sind korrespondierende, oben und unten an der Quertraverse des Hebewerkzeugs 12 angeordnete und nach unten gerichtet Stege einpasst. Durch diese formschlüssige Verbindung ist das Hebewerkzeug 12 gegen eine Ablösung vom Handhabungsgerät 9 nach unten bzw. nach vorne sowie gegen eine nach unten gerichtete Kippbewegung gesichert. Damit sich das Hebewerkzeug 12 nicht nach einem Vorkommnis wie beispielsweise einer Kollision mit anderen Bestandteilen des Systems 1 unbeabsichtigt vom Handhabungsgerät 9 lösen kann, indem es nach oben verschoben oder nach oben gekippt wird, umfasst die Schnittstelle 15 ferner einen federbelasteten Stößel, der gegen eine Verriegelungsposition vorgespannt ist, in welcher er nach vorne über die Ebene der Schnittstelle 15, entsprechend der Auflageebene für das Hebewerkzeug 12 hinaus steht. An der Quertraverse des Hebewerkzeugs 12 ist eine korrespondierende Ausnehmung angeordnet, in welche der Stößel eingreift. Auf diese Weise wird das Hebewerkzeug 12 an der Schnittstelle 15 fixiert. Die korrespondierenden Kerben und Stege sowie der Stößel und die Ausnehmung bilden gemeinsam eine Befestigung und gleichzeitig einen Verriegelungsmechanismus 21, dessen Funktionsweise in weiterer Folge noch näher erklärt wird.

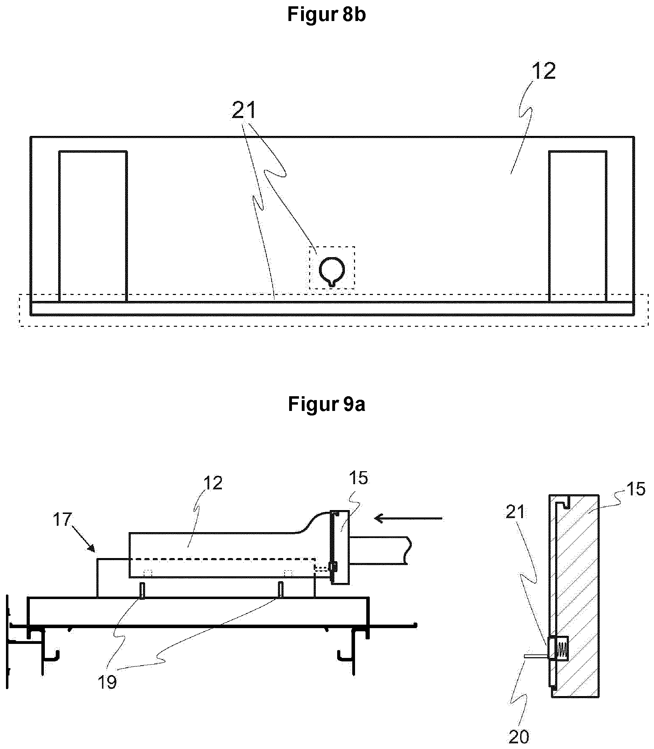

In Figuren 9a-9c ist ein Vorgang zur Ablage eines Hebewerkzeugs 12, das wie in Figuren 8a-8b gezeigt ausgebildet und am Handhabungsgerät9 befestigt ist, an einem wie in Figuren 6a-6b dargestellten Speicherplatz 17 dargestellt. Auf der linken Seite der Figuren ist jeweils eine Gesamtansicht abgebildet, auf der rechten Seite eine schematische Detailansicht des Befestigungsbereichs des Hebewerkzeugs 12 am Handhabungsgeräts 9.

Wie in Figur 8a zu erkennen ist, kann das wie in Figuren 8a-8b gezeigt an der Schnittstelle 15 des Handhabungsgeräts 9 befestigte Hebewerkzeug 12 translatorisch in Pfeilrichtung über den Speicherplatz 17 gefahren werden. Die Einfahrhöhe ist dabei so gewählt, dass der Druckpin der Betätigungsvorrichtung 20 des Speicherplatzes 17 in der letzten Phase der horizontalen Einfahrbewegung von vorne auf den Stößel des Verriegelungsmechanismus 21 trifft und diesen gegen die Vorspannung der Feder aus der Ausnehmung in der Quertraverse des Hebewerkzeugs 12 in die Schnittstelle 15 drückt.

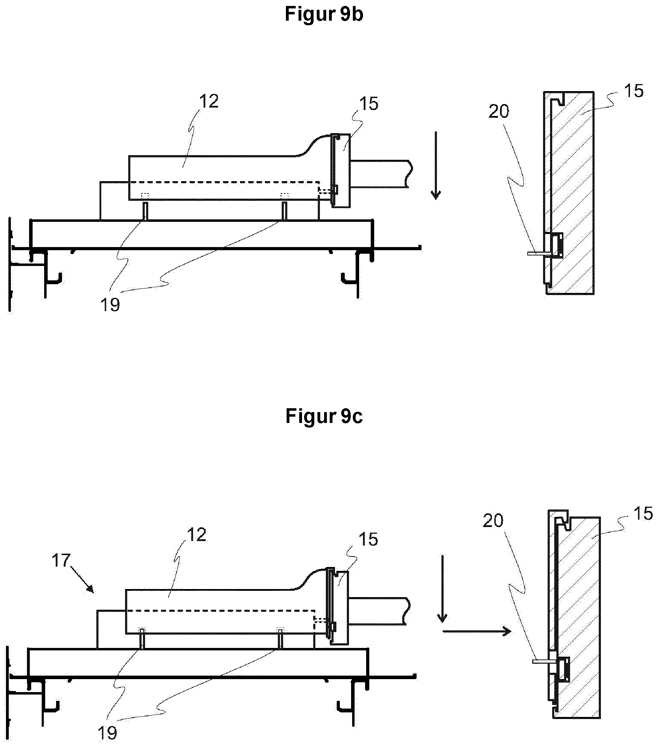

Dies ist in der rechten Abbildung der Figur 9b gut zu ernennen. Statt des Stößels des Verriegelungsmechanismus 21 greift nun der Druckpin der Betätigungsvorrichtung 20 in die Ausnehmung in der Quertraverse des Hebewerkzeugs 12 ein. Da der Druckpin, wie insbesondere in Figur 8b gut zu erkennen ist, eine deutlich kleinere vertikale Erstreckung als der Stößel aufweist und das Hebewerkzeug deshalb in diesem Zustand relativ zur Schnittstelle nach oben bewegt werden kann, wird das Hebewerkzeug 12 in der letzten Phase der Einfahrbewegung entsichert.

Nachdem das Hebewerkzeug 12 so richtig über dem Speicherplatz 17 positioniert wurde, wird es in Pfeilrichtung nach unten gefahren, wie in der linken Abbildung der Figur 8b gezeigt ist, bis die vertikalen Steckpins der Positionierhilfen 19 in korrespondierende Löcher an der Unterseite des Hebewerkzeugs eingreifen und am Boden dieser Löcher anstehen.

Fährt dann das Handhabungsgerät 9 die Schnittstelle 15 noch weiter nach unten, wie es in Figur 9c gezeigt ist, werden die Stege der Quertraverse des Hebewerkzeugs 12 aus den Kerben der Schnittstelle 15 gehoben und das Hebewerkzeug so von der Schnittstelle 15 gelöst. Die Schnittstelle 15 kann ohne das Hebewerkzeug 12 zurückgefahren werden.

Zum Bestücken des Handhabungsgeräts 9 mit einem Hebewerkzeug 4, 12, 14, 24 kann der in Figuren 9a-9c gezeigte Prozess umgekehrt werden.

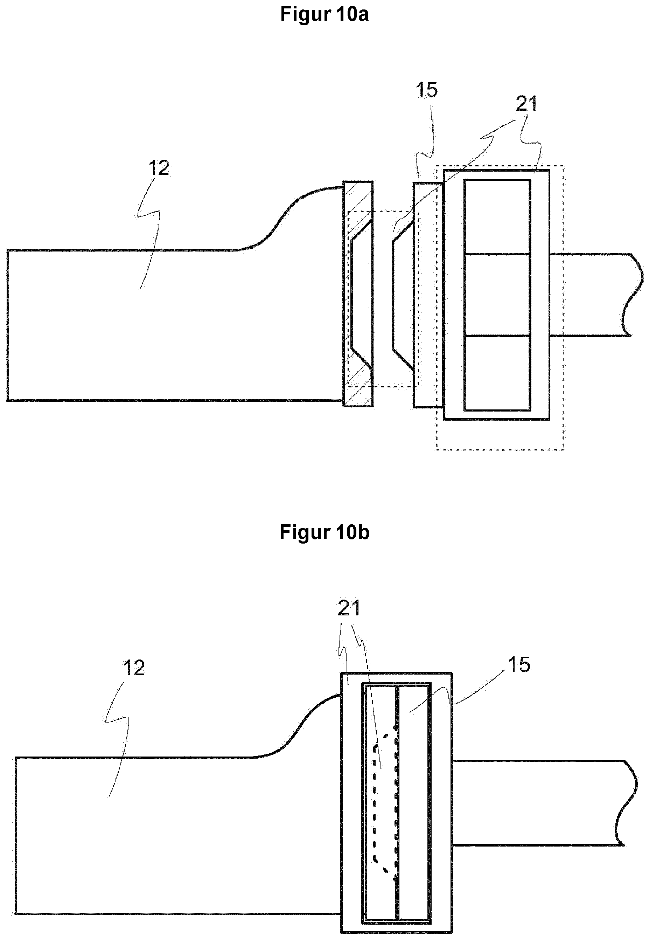

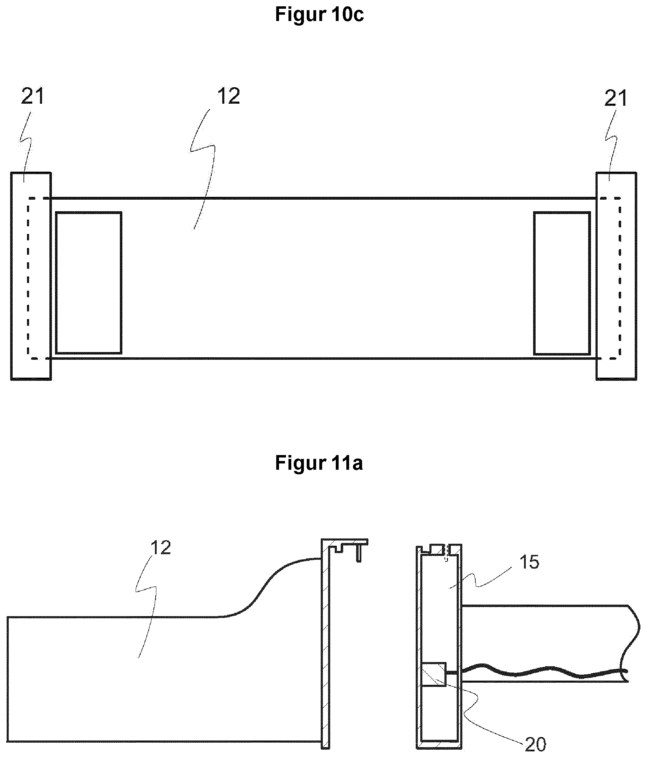

In Figuren 10a-10c ist eine alternative Ausführungsform eines Befestigungsbereichs eines Hebewerkzeugs 12 am Handhabungsgerät 9 gezeigt. Die Stege, Kerben, Stößel und Ausnehmungen der Ausführungsform gemäß Figuren 8a-8b sind in dieser Ausführungsform durch eine nach vorne gerichtete Ausbauchung an der Schnittstelle 15, eine korrespondierende Einformung an der Rückseite der Quertraverse des Hebewerkzeugs 12, und seitliche Halteklammern ersetzt, die an der Schnittstelle 15 beweglich befestigt sind und seitlich über die vereinigten Bauteile des Hebewerkzeugs 12 und der Schnittstelle 15 gesetzt werden können, um die relative Position zu fixieren und gemeinsam mit den korrespondierenden Konturen der Ausbauchung und der Einformung einen Verriegelungsmechanismus bilden. Der Vorgang zum Ablegen und Aufnehmen der Zinken oder einer Zinke des Hebewerkzeugs kann analog zum in Figuren 9a-9c dargestellten Vorgang erfolgen.

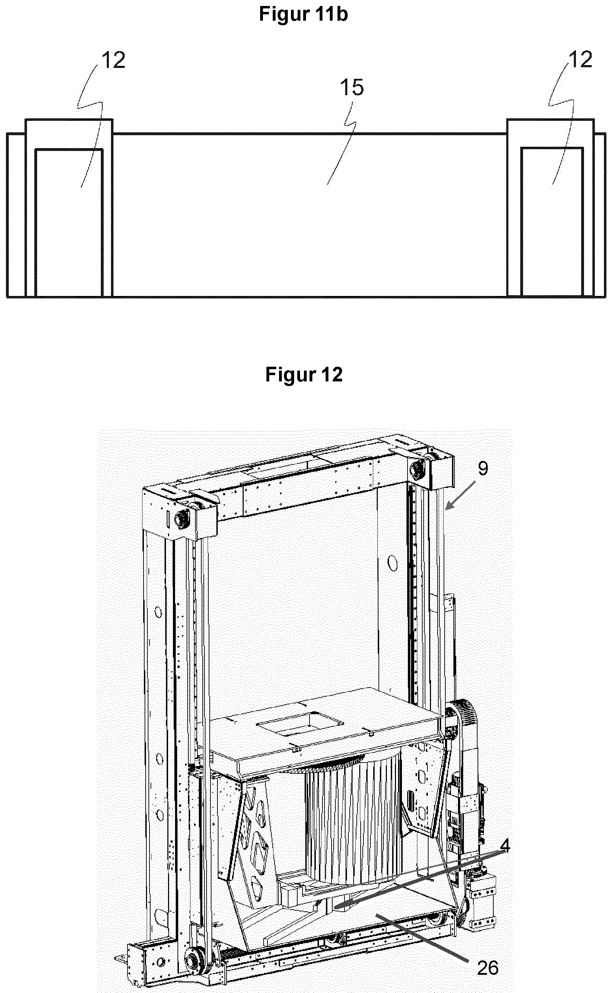

Letztlich ist in Figuren 11a-11b eine wiederum andere Ausführungsform eines Befestigungsbereichs eines Hebewerkzeugs 12 am Handhabungsgerät 9 gezeigt. Diese Ausführungsform eignet sich insbesondere bei einer einzelnen Befestigung von Gabelzinken einer Gabel ohne Quertraverse. An Stelle einer Quertraverse umfassen die einzelnen Zinken des Hebewerkzeugs 12 jeweils eine Basisplatte, die auf der Schnittstelle 15 der Handhabungsgeräts 9 anliegt. An der Oberseite der Basisplatte ist ein nach hinten auskragendes Dach mit nach unten stehenden Befestigungspins ausgebildet, die in korrespondierende Bohrungen an der Oberseite der Schnittstelle 15 eingreifen können. Die Verriegelungsvorrichtung 21 wird durch einen in der Schnittstelle 15 angeordneten Elektromagneten dargestellt. Die Betätigungsvorrichtung 20 versorgt den Elektromagneten mit Strom um die Verriegelungsvorrichtung zu schließen und stoppt die Stromversorgung um die Verriegelungsvorrichtung zu öffnen. Hierzu können an der Betätigungsvorrichtung 20 weitere Sensoren vorgesehen sein, die beispielsweise das Vorhandensein eines Hebewerkzeugs an der Lastaufnahme erkennen. Der Vorgang zum Ablegen und Aufnehmen der Zinken oder einer Zinke des Hebewerkzeugs kann wiederum analog zum in Figuren 9a-9c dargestellten Vorgang erfolgen.

Gemäß einer in der Figur 12 dargestellten Ausführungsvariante der Erfindung werden die Hebewerkzeuge 4 auf einem Ablageplatz 26 des Handhabungsgerätes 9 abgelegt. Die lösbare Verriegelungsvorrichtung des Handhabungsgeräts 9 wird an diesem Ablageplatz von einem geschlossenen in einen offenen Zustand und umgekehrt versetzt. In einer nicht dargestellten Ausführungsform kann die Ölwanne des Handhabungsgerät als Ablageplatz für die zu wechselnden Hebewerkzeuge dienen. Diese Ausführung hat den Vorteil, dass ein Wechsel der Hebewerkzeuge während Folgeposition und somit taktzeitgleich mit der Positionsveränderung des Handhabungsgerätes erfolgen kann.

### Bezugszeichenliste:

- 1: Speicher- und/oder Fertigungssystem
- 2: Regal
- 3: Palette vom Typ A mit Werkstück bzw. Werkzeug
- 4: Hebewerkzeug vom Typ A'
- 5: Rüstplatz mit Speicherplatz der Wechselstation
- 6: Rüstplatz
- 7: Bearbeitungsmaschine mit Speicherplatz der Wechselstation
- 8: Bearbeitungsmaschine
- 9: Handhabungsgerät
- 10: Regal mit Speicherplatz der Wechselstation
- 11: Bodenfahrschiene für das Handhabungsgerät
- 12: Hebewerkzeug
- 13: Palette vom Typ B mit Werkstück bzw. Werkzeug
- 14: Hebewerkzeug vom Typ B'
- 15: Schnittstelle an demHandhabungsgerät
- 16: eigenständige Wechselstation
- 17: Speicherplatz einer Wechselstation
- 18: Speicherplatz einer Wechselstation
- 19: Positionierhilfe
- 20: Betätigungsvorrichtung
- 21: Verriegelungsmechanismus
- 22: Rotierbare Regalanordnung
- 23: Palette vom Typ C mit Werkstück bzw. Werkzeug
- 24: Hebewerkzeug vom Typ C'
- 25: Sensoranordnung
- 26: Ablageplatz für Hebewerkzeug

## Patentansprüche

1. Speicher- und/oder Fertigungssystem (1) mit wenigstens einem Handhabungsgerät (9), bei dem es sich um ein schienengeführtes Fahrzeug mit einer in einer Längsrichtung des Systems (1) bewegbaren Fahreinheit oder um ein am Standort fixiertes Handhabungsgerät (9) mit einer in einer um die eigenen Achse bewegbaren Fahreinheit handelt, mit einer in Vertikalrichtung bewegbaren Hubeinheit des Handhabungsgeräts (9) und einer vorzugsweise in Querrichtung bewegbaren und/oder rotierbaren Lastaufnahmeeinheit handelt, wobei die Lastaufnahmeeinheit eine Schnittstelle (15) zur Befestigung eines Hebewerkzeugs (4, 12, 14, 24) aufweist, die so ausgebildet ist, dass das Hebewerkzeug (4, 12, 14, 24) oder ein Teil des Hebewerkzeugs (4, 12, 14, 24) automatisch gewechselt oder entfernt werden kann, wobei das Handhabungsgerät (9) eine lösbare Verriegelungsvorrichtung (21) aufweist, in dessen geschlossenem Zustand das Hebewerkzeug (4, 12, 14, 24) bzw. dessen wechselbarer Teil gegen Verlust gesichert sind,
**dadurch gekennzeichnet,**
**dass** das Speicher- und/oder Fertigungssystem (1) oder das Handhabungsgerät (9) mindestens einen Speicherplatz (17) oder Ablageplatz (26) für Hebewerkzeuge aufweist, wobei
die lösbare Verriegelungsvorrichtung (21) des Handhabungsgeräts (9) an einem Speicherplatz (17) oder Ablageplatz (26) von einem geschlossenen in einen offenen Zustand und umgekehrt versetzt werden kann, und wobei das Speicher- und Fertigungssystem (1) wenigstens zwei Speicherplätze (17, 18) umfasst, wobei
jeder Speicherplatz (17) eine Betätigungsvorrichtung (20) aufweist, die die Verriegelungsvorrichtung (21) des Handhabungsgeräts (9) von einem geschlossenen in einen offenen Zustand und umgekehrt versetzt, wobei
die Verriegelungsvorrichtung nur am Speicherplatz (17) lösbar ist.

2. Speicher und/oder Fertigungssystem (1) nach Anspruch 1, wobei die Betätigungsvorrichtung (20) mechanisch, hydraulisch, pneumatisch, elektrisch oder in einer Kombination dieser Wirkmechanismen die Verriegelungsvorrichtung (21) von einem geschlossenen in einen offenen Zustand und umgekehrt versetzt.

3. Speicher und/ oder Fertigungssystem (1) nach einem der vorhergehenden Ansprüche, wobei die Betätigungsvorrichtung (20) ein Signal zum Öffnen und/oder Schließen der Verriegelungsvorrichtung (21) des Handhabungsgeräts (9) an die Steuerung des Handhabungsgeräts (9) bzw. eine übergeordnete Steuerung gibt.

4. Speicher- und/oder Fertigungssystem (1) nach einem der vorhergehenden Ansprüche, **dadurch gekennzeichnet, dass** die wenigstens zwei Speicherplätze (17, 18) in einer Wechselstation (10) vorliegen

5. Speicher und/oder Fertigungssystem (1) nach einem der vorhergehenden Ansprüche, **dadurch gekennzeichnet, dass** die Speicherplätze (17, 18) in Bestandteile des Speicher- und/oder Fertigungssystems (1), insbesondere in Regalen (10) oder Maschinen (7) oder Rüstplätzen (5), integriert sind

6. Speicher- und/oder Fertigungssystem (1) nach einem der vorhergehenden Ansprüche, **dadurch gekennzeichnet, dass** die Speicherplätze (17, 18) Positionierhilfen (19) für darauf abgelegte Hebewerkzeuge (4, 12, 14, 24) aufweisen, vorzugsweise Steckpins oder Schienen.

7. Speicher- und/oder Fertigungssystem (1) nach einem der vorhergehenden Ansprüche, **dadurch gekennzeichnet, dass** die Speicherplätze (17, 18) wenigstens einen Sensor (25) zur Erkennung der Belegung des Speicherplatzes (17, 18) mit einem Hebewerkzeug (4, 12, 14, 24) bzw. Hebewerkzeugteil, der Position des Hebewerkzeugs bzw. Hebewerkzeugteils am Speicherplatz (17, 18) und/oder der Art des am Speicherplatz befindlichen Hebewerkzeugs bzw. Hebewerkzeugteils aufweisen.

8. Speicher- und/oder Fertigungssystem (1) nach einem der vorgehenden Ansprüche, **dadurch gekennzeichnet, dass** das Handhabungsgerät (9) wenigstens einen Sensor (25) zur Bestimmung des Vorhandenseins bzw. der Position des Hebewerkzeugs an der Lastaufnahme aufweist

9. Speicher- und/oder Fertigungssystem (1) nach einem der vorhergehenden Ansprüche, **dadurch gekennzeichnet, dass** das Handhabungsgerät (9) zwei oder mehr Lastaufnahmeeinheiten mit je mindestens einer beschriebenen Schnittstelle (15) oder die Lastaufnahmeeinheit zwei oder mehr wie beschriebene Schnittstellen (15) umfasst.

## Claims

1. Storage system and/or production system (1) having at least one handling device (9) which is a rail-bound vehicle having a travel unit movable in a longitudinal direction of the system (1) or a handling device (9) fixed at the location with a travel unit movable about its own axis, a lifting unit of the handling device (9) movable in the vertical direction, and a load receiving unit preferably movable and/or rotatable in the transverse direction, wherein the load receiving unit has an interface (15) for fastening a lifting tool (4, 12, 14, 24) that is configured such that the lifting tool (4, 12, 14, 24) or a part of the lifting tool (4, 12, 14, 24) can be automatically changed or removed, wherein the handling device (9) has a releasable latching device (21) in whose closed state the lifting tool (4, 12, 14, 24) or its changeable part is secured against loss,
**characterized in that**
the storage system and/or production system (1) or the handling device (9) has at least one storage space (17) or placing location (26) for lifting tools, wherein the releasable latching device (21) of the handling device (9) at a storage space (17) or placing location (26) can be displaced from a closed state into an open state and vice versa and wherein the storage system and/or production system (1) has at least two storage spaces (17, 18),
wherein each storage space (17) has an actuation device (20) that displaces the latching device (21) of the handling device (9) from a closed state into an open state and vice versa, wherein
the latching device is only releasable at the storage space (17).

2. Storage system and/or production system (1) in accordance with claim 1, wherein the actuation device (20) mechanically, hydraulically, pneumatically electrically or in combination of these effect mechanisms displaces the latching device (21) from a closed state into an open state and vice versa.

3. Storage system and/or production system (1) in accordance with one of the preceding claims, wherein the actuation device (20) emits a signal to open and/or close the latching device (21) of the handling device (9) to the control of the handling device (9) or to a higher ranking control.

4. Storage system and/or production system (1) in accordance with one of the preceding claims, **characterized in that** the at least two storage spaces (17, 18) are present in a changing station (10).

5. Storage system and/or production system (1) in accordance with one of the preceding claims, **characterized in that** the storage spaces (17, 18) are integrated in components of the storage system and/or production system (1), in particular in stacks (10) or machines (7) or setup stations (5).

6. Storage system and/or production system (1) in accordance with one of the preceding claims, **characterized in that** the storage spaces (17, 18) have positioning aids (19) for lifting tools (4, 12, 14, 24) placed thereon, preferably center pins or rails.

7. Storage system and/or production system (1) in accordance with one of the preceding claims, **characterized in that** the storage spaces (17, 18) have at least one sensor (25) for recognizing the occupancy of the storage space (17, 18) by a lifting tool (4, 12, 14, 24) or a lifting tool part, the position of the lifting tool or of the lifting tool part at the storage space (17, 18), and/or the kind of the lifting tool or lifting tool part located at the storage space.

8. Storage system and/or production system (1) in accordance with one of the preceding claims, **characterized in that** the handling device (9) has at least one sensor (25) for determining the presence or the position of the lifting tool at the load receiver.

9. Storage system and/or production system (1) in accordance with one of the preceding claims, **characterized in that** the handling device (9) comprises two or more load receiving units each having at least one described interface (15) or the load receiving unit comprises two or more interfaces (15) as described.

## Revendications

1. Système de stockage et/ou de fabrication (1) avec au moins un appareil de manipulation (9), qui consiste en un véhicule guidé sur rails avec une unité de conduite mobile dans une direction longitudinale du système (1) ou en un appareil de manipulation (9) fixé sur place avec une unité de conduite mobile autour de l'axe propre, avec une unité de levage de l'appareil de manipulation (9) mobile dans la direction verticale et une unité de réception de charge mobile et/ou rotative de préférence dans la direction transversale, l'unité de réception de charge présentant une interface (15) pour la fixation d'un outil de levage (4, 12, 14, 24), qui est réalisée de telle sorte que l'outil de levage (4, 12, 14, 24) ou une partie de l'outil de levage (4, 12, 14, 24) peut être remplacé ou enlevé automatiquement, l'appareil de manipulation (9) présentant un dispositif de verrouillage libérable (21), dans l'état fermé duquel l'outil de levage (4, 12, 14, 24) ou sa partie remplaçable sont protégés contre toute perte,
**caractérisé en ce que**
le système de stockage et/ou de fabrication (1) ou l'appareil de manipulation (9) présente au moins un emplacement de stockage (17) ou un emplacement de dépôt (26) pour des outils de levage,
le dispositif de verrouillage libérable (21) de l'appareil de manipulation (9) pouvant passer d'un état fermé à un état ouvert et inversement à un emplacement de stockage (17) ou à un emplacement de dépôt (26), et le système de stockage et de fabrication (1) comprenant au moins deux emplacements de stockage (17, 18),
chaque emplacement de stockage (17) présentant un dispositif d'actionnement (20) qui fait passer le dispositif de verrouillage (21) de l'appareil de manipulation (9) d'un état fermé à un état ouvert et inversement,
le dispositif de verrouillage n'étant libérable qu'à l'emplacement de stockage (17).

2. Système de stockage et/ou de fabrication (1) selon la revendication 1, dans lequel le dispositif d'actionnement (20) fait passer le dispositif de verrouillage (21) d'un état fermé à un état ouvert et inversement, de manière mécanique, hydraulique, pneumatique, électrique ou par une combinaison de ces mécanismes d'action.

3. Système de stockage et/ou de fabrication (1) selon l'une quelconque des revendications précédentes, dans lequel le dispositif d'actionnement (20) envoie un signal d'ouverture et/ou de fermeture du dispositif de verrouillage (21) de l'appareil de manipulation (9) à la commande de l'appareil de manipulation (9) ou à une commande supérieure.

4. Système de stockage et/ou de fabrication (1) selon l'une quelconque des revendications précédentes, **caractérisé en ce que** les au moins deux emplacements de stockage (17, 18) sont présents dans une station de remplacement (10).

5. Système de stockage et/ou de fabrication (1) selon l'une quelconque des revendications précédentes, **caractérisé en ce que** les emplacements de stockage (17, 18) sont intégrés dans des constituants du système de stockage et/ou de fabrication (1), notamment dans des étagères (10) ou des machines (7) ou des emplacements de préparation (5).

6. Système de stockage et/ou de fabrication (1) selon l'une quelconque des revendications précédentes, **caractérisé en ce que** les emplacements de stockage (17, 18) présentent des auxiliaires de positionnement (19) pour les outils de levage (4, 12, 14, 24) qui y sont déposés, de préférence des broches ou des rails.

7. Système de stockage et/ou de fabrication (1) selon l'une quelconque des revendications précédentes, **caractérisé en ce que** les emplacements de stockage (17, 18) présentent au moins un capteur (25) pour détecter l'occupation de l'emplacement de stockage (17, 18) par un outil de levage (4, 12, 14, 24) ou une partie d'outil de levage, la position de l'outil de levage ou de la partie d'outil de levage sur l'emplacement de stockage (17, 18) et/ou le type d'outil de levage ou de partie d'outil de levage se trouvant sur l'emplacement de stockage.

8. Système de stockage et/ou de fabrication (1) selon l'une quelconque des revendications précédentes, **caractérisé en ce que** l'appareil de manipulation (9) présente au moins un capteur (25) pour déterminer la présence ou la position de l'outil de levage sur le support de charge.

9. Système de stockage et/ou de fabrication (1) selon l'une quelconque des revendications précédentes, **caractérisé en ce que** l'appareil de manipulation (9) comprend deux unités de réception de charge ou plus avec chacune au moins une interface décrite (15) ou l'unité de réception de charge comprend deux interfaces (15) comme décrites ou plus.
